# EUROPÄISCHE PATENTANMELDUNG

(11) **EP 2 541 194 A1**
(43) Veröffentlichungstag der Anmeldung: **02.01.2013**
(21) Anmeldenummer: 11172439.9
(22) Anmeldetag: 01.07.2011
(51) Int. Cl.: G01C 15/00, G01B 11/24, G01S 5/16

(54) **Konstruktionsvermessungsgerät zum Verfolgen, Vermessen und Markieren von Kanten und Eckpunkten aneinandergrenzender Oberflächen**

(71) Anmelder: Hexagon Technology Center GmbH, 9435 Heerbrugg (CH)
(72) Erfinder: Metzler, Bernhard, A-6850 Dornbirn (AT)
(74) Vertreter: Gyaja, Christoph Benjamin

(57) **Zusammenfassung**

Konstruktionsvermessungsgerät (10) mit einer zumindest teilweise automatisch ablaufenden Kantenverfolgungs- und Projektionsfunktionalität, in deren Rahmen, nach Ausrichtung einer Anzieleinheit (13) mit einer Ausrichtungsanzeigefunktionalität (2) auf einen bekannten bzw. von einem Benutzer definierten ersten Eckpunkt (1a) zwischen aneinandergrenzenden Oberflächen der Konstruktion und einer Bildaufnahme dieses ersten Eckpunkts (1a) mit seiner Umgebung mittels einer Kantenbestimmung durch Bildverarbeitung Kantenlinien (3a, 3b, 3c, 3d, 3e) bestimmt werden, und eine benutzerdefinierte Kantenlinie (3a, 3b, 3c) von der Anzieleinheit (13) mindestens bis zu einem weiteren Eckpunkt (1b) automatisch verfolgt wird, wobei gegebenenfalls entlang der benutzerdefinierten Kantenlinie (3a, 3b, 3c) befindliche Raumpunkte vermessen werden.

## Beschreibung

Die Erfindung betrifft ein Konstruktionsvermessungsgerät zum Vermessen und Markieren von Raumpunkten entlang Kanten und/oder Eckpunkten zwischen aneinandergrenzenden Oberflächen einer Konstruktion im Rahmen von Bau und/oder Ausbau - insbesondere Innenausbau - von Gebäuden nach dem Oberbegriff des Anspruchs 1 sowie ein zugehöriges Verfahren nach dem Oberbegriff des Anspruchs 9 zum Verfolgen und Vermessen bzw. Markieren von Raumpunkten entlang Kanten und/oder Eckpunkten zwischen aneinandergrenzenden Oberflächen einer Konstruktion mittels des erfindungsgemässen Konstruktionsvermessungsgeräts und ein Computerprogrammprodukt zur Bereitstellung, Steuerung und Durchführung einer Kantenverfolgungs- und Projektionsfunktionalität für ein solches Gerät nach dem Oberbegriff des Anspruchs 15.

Bezüglich Aufgaben zur Vermessung von Konstruktionen ist ein wesentlicher Aspekt, dass signifikante zu vermessende Raumpunkte vielfach miteinander durch Kanten verbunden sind. Beispielsweise verbindet eine Kante, welche eine Wand eines Raumes von der Decke trennt, zwei Eckpunkte des Raumes. Sollen beispielsweise alle vier Eckpunkte der Decke eines Raumes mit rechteckigem Grundriss vermessen werden, so kann die Anzielrichtung eines Konstruktionsvermessungsgeräts von einem ersten Eckpunkt zu einem nächsten Eckpunkt verändert werden, indem eine zwischen diesen Eckpunkten verlaufende Kante verfolgt wird.

Im Fall einfacher konventioneller Konstruktionsvermessungsgeräte wird manuell ein Raumpunkt, z.B. ein Eckpunkt, angezielt, und die Anzielrichtung wird dann manuell zu einem nächsten zu vermessenden Raumpunkt, z.B. einem weiteren Eckpunkt, verändert.

Die DE 196 48 626 beispielsweise offenbart ein Verfahren und eine Vorrichtung zur Flächenvermessung mit einem Laserentfernungsmesser mit einem Lasersender und einem Laserempfänger. Der Laserentfernungsmesser ist auf einem Stativ montiert. Die Vorrichtung umfasst des Weiteren eine Kipp-und Dreheinrichtung zur Ausrichtung und Richtungsmessung, ein Zielfernrohr sowie eine elektronische Auswerteeinheit zur Winkeldaten- und Entfernungsdatenerfassung und Datenübergabe an einen Computer. Für die Vermessung eines Raumes wird das Gerät an einer zentralen Stelle des Raumes positioniert, von der aus alle zu erfassenden Raum- und/oder Flächeneckpunkte mit dem Laserstrahl anvisiert und beaufschlagt werden können. Gemäss der Offenbarung der DE 196 48 626 werden die zu vermessenden Raumpunkte dabei jeweils einzeln anvisiert, gegebenenfalls bei grösserer Entfernung mit Unterstützung der Beobachtung durch ein Zielfernrohr. Eine automatisierte sequentielle Vermessung mehrerer Raumpunkte, zu vergleichen beispielsweise mit einem Scan, wird in der DE 196 48 626 nicht offenbart. Insbesondere gibt es in dieser Schrift keinerlei Hinweise für Möglichkeiten zu einer automatischen Verfolgung von Kanten zwischen benachbarten zu vermessenden Eckpunkten.

Eine ähnliche Vorrichtung und zugehörige Vermessungsmethode werden in der DE 44 43 413, der ergänzenden Offenlegungsschrift DE 195 45 589 und der WO 96/18083, welche die Priorität der DE 44 43 413 beansprucht, offenbart. Darin werden ein Verfahren und eine Vorrichtung zum Vermessen und Markieren an distanzierten Linien, Flächen oder in zumindest teilweise geschlossenen Räumen beschrieben. Einer oder mehrere relevante Raumpunkte werden nach jeweils zwei Raumwinkeln und der Entfernung gegenüber einem Bezugsort mittels eines kardanisch gelagerten Laserdistanzmessgeräts vermessen. Das Laserdistanzmessgerät ist um zwei zueinander senkrechte Achsen, welche mit Winkelmessern ausgestattet sind, schwenkbar. Gemäss einer in diesen Schriften beschriebenen Ausführungsform werden zu vermessende Raumpunkte von Hand angesteuert, aus den Vermessungsdaten, basierend auf einem vorgegebenen Relativbezug zwischen Vermessung und Markierung, Markierungspunkte berechnet, die dann von der Mess- und Markierungsvorrichtung selbständig angefahren werden.

Es wird jedoch keine automatisch ablaufende Funktionalität zur Verfolgung von Kanten, ausgehend von lediglich einem definierten, ersten Raumpunkt, offenbart, ebenso wenig wie eine automatisierte sequentielle Vermessung mehrerer Raumpunkte, zu vergleichen beispielsweise mit einem Scan.

In der EP 1 733 185 werden eine Vorrichtung und ein Verfahren offenbart, womit speziell Kanten auf einer polygonalen, ansonsten ebenen Oberfläche genau vermessen werden sollen. Es wird jedoch keine automatisch ablaufende Funktionalität zur Verfolgung von Kanten, ausgehend von lediglich einem definierten, ersten Raumpunkt, offenbart, ebenso wenig wie eine automatisierte sequentielle Vermessung mehrerer Raumpunkte.

Die EP 2 053 353 offenbart ein referenzlinienprojizierendes Gerät mit einem elektro-optischen Distanzmesser. Gemäss der Lehre dieser Anmeldeschrift wird ein optischer Referenzstrahl, insbesondere ein Laserstrahl, entlang eines definierten Referenzpfads geführt. Im Zusammenhang mit dem Durchlaufen des Referenzpfades erfolgt eine Entfernungsmessung zu mindestens einem Punkt des Referenzpfads durch Aussenden eines zum Referenzstrahl parallelen oder koaxialen Messstrahls oder Verwenden des Referenzstrahls als Messstrahl. Nach dem Empfangen von Anteilen des zurückgeworfenen Messstrahls wird ein Signal aus diesen Anteilen abgeleitet und eine Distanz zu dem mindestens einen Punkt aus dem Signal bestimmt, wobei das Führen entlang des Referenzpfads mindestens einmal wiederholt wird und bei jedem Durchlaufen des Referenzpfads für den mindestens einen Punkt jeweils eine Distanz oder distanzbezogene Grösse ermittelt wird. Bei winkelsynchronen Distanzmessungen werden also gleiche Punkte mehrfach abgetastet.

Mittels Integration eines Distanzmessers ermöglicht das in der EP 2 053 353 offenbarte System auch eine Steuerung der Projektion anhand einer ermittelten Oberflächentopographie. Insbesondere wird offenbart, dass nach Bestimmung eines Oberflächenprofils eine Projektion auf eine gekrümmte Oberfläche so angepasst werden kann, dass Verzerrungen durch die gekrümmte Oberfläche kompensiert werden und die Projektion der unverzerrten Kontur eines auszumessenden bzw. markierenden Objekts entspricht.

Auch in der EP 2 053 353 wird jedoch keine Funktionalität für eine, insbesondere automatische, Verfolgung von Kanten, ausgehend von lediglich einem definierten, ersten Raumpunkt, offenbart oder nahe gelegt.

Aufgabe der Erfindung ist die Bereitstellung eines Konstruktionsvermessungsgeräts zum Vermessen und Markieren von signifikanten Raumpunkten, insbesondere Verfolgung von Kanten und Vermessung von deren Eckpunkten, mit einem verbesserten Bedienkomfort und entsprechend erhöhter möglicher Vermessungs- bzw. Markierungsgeschwindigkeit.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen sowie der Beschreibung einschliesslich der Figurenbeschreibungen zu entnehmen.

Gegenstand der Erfindung ist ein Konstruktionsvermessungsgerät zum Verfolgen und Vermessen bzw. Markieren von Raumpunkten entlang Kanten und/oder von Eckpunkten zwischen aneinandergrenzenden Oberflächen einer Konstruktion im Rahmen von Bau und/oder Ausbau - insbesondere Innenausbau von Gebäuden. Das Gerät umfasst eine Basis und ein an der Basis um eine Drehachse innerhalb eines Winkelbereichs eines Azimutal- bzw. Horizontalwinkels drehbar gelagertes Oberteil. Am Oberteil ist eine um eine Schwenkachse innerhalb eines Winkelbereichs eines Elevations- bzw. Vertikalwinkels schwenkbar gelagerte, mit einer zur Emission eines Laserstrahls ausgebildeten Laserquelle und einem Entfernungsbestimmungsdetektor zur Bereitstellung einer Distanzmessfunktionalität ausgestattete Anzieleinheit angeordnet. Die Anzieleinheit umfasst ausserdem einen bildgebenden Detektor, insbesondere eine Kamera, und eine Ausrichtungsanzeigefunktionalität zur Angabe einer Ausrichtung der Anzieleinheit auf einen Raumpunkt als Anzielpunkt.

Das erfindungsgemässe Konstruktionsvermessungsgerät umfasst des Weiteren eine Auswerte- und Steuereinheit mit einem Display, auf dem die Ausrichtung der Anzieleinheit mittels der Ausrichtungsanzeigefunktionalität, überblendbar zu einem Bild eines aktuell angezielten Raumpunkts, anzeigbar ist.

Das Gerät umfasst einen ersten und zweiten Drehantrieb, welche das Oberteil bzw. die Anzieleinheit antreibbar bzw. in einem Azimut- und einem Elevationswinkel ausrichtbar machen. Eine räumliche Ausrichtung der Anzieleinheit gegenüber der Basis ist über zwei Winkelmesser zur Bestimmung der horizontalen und vertikalen Ausrichtung, d.h. des Azimut- und des Elevationswinkels, erfassbar. Die Auswerte-und Steuereinheit ist mit der Laserquelle, dem Entfernungsbestimmungsdetektor sowie den Winkelmessern verbunden, um eine erfasste Distanz einer entsprechenden Ausrichtung (d.h. dabei erfassten Azimut- und Elevationswinkeln) zuzuordnen und somit Koordinaten für Raumpunkte zu bestimmen. Ausserdem ist die Auswerte- und Steuereinheit mit dem bildgebenden Detektor verbunden.

Zusätzlich kann das Gerät mit zwei Neigungssensoren, vorzugsweise mit zwei Libellensensoren ("bubble sensors"), deren Messdaten dann ebenfalls an die Auswerte- und Steuereinheit übermittelt werden, ausgestattet sein. Damit kann zusätzlich die Ausrichtung der Anzieleinheit bezüglich des Schwerefeld-Vektors der Erde bestimmt werden.

Erfindungsgemäss weist das Konstruktionsvermessungsgerät eine nach Auslösung zumindest teilweise automatisch ablaufende Kantenverfolgungs- und Projektionsfunktionalität zum Verfolgen und Vermessen bzw. Markieren von Kanten und/oder Eckpunkten, und gegebenenfalls entlang einer Kante befindlichen Raumpunkten, zwischen aneinandergrenzenden, beliebig geformten Oberflächen der Konstruktion auf.

Im Rahmen dieser Funktionalität werden, nach Ausrichtung der Anzieleinrichtung mit der Ausrichtungsanzeigefunktionalität auf einen bekannten bzw. von einem Benutzer definierten ersten Eckpunkt zwischen aneinandergrenzenden Oberflächen der Konstruktion und einer Bildaufnahme dieses ersten Eckpunkts mit seiner Umgebung mittels einer Kantenbestimmung durch Bildverarbeitung Kantenlinien bestimmt, und eine benutzerdefinierte Kantenlinie wird von der Anzieleinheit mindestens bis zu einem weiteren Eckpunkt automatisch verfolgt, wobei gegebenenfalls entlang der benutzerdefinierten Kantenlinie befindliche Raumpunkte vermessen werden.

Vorzugsweise ist die Kantenverfolgungs- und Projektionsfunktionalität dazu ausgelegt, einem Benutzer Vorschläge zur Verfolgung von Kantenlinien durch Symbole auf einem Display der Auswerte- und Steuereinheit dem Benutzer darzustellen, und nach Auswahl und Bestätigung eines durch ein Symbol dargestellten Vorschlags eine ausgewählte Kantenlinie von der Anzieleinheit mindestens bis zu einem weiteren Eckpunkt automatisch zu verfolgen, wobei gegebenenfalls entlang der benutzerdefinierten Kantenlinie befindliche Raumpunkte vermessen werden.

Erfindungsgemäss kann im Rahmen der Verfolgung einer ausgewählten Kantenlinie durch entsprechende Veränderung der Ausrichtung der Anzieleinheit in horizontaler und/oder elevativer Ausrichtung kontinuierlich und/oder periodisch eine Aufnahme von Bildern und eine Bestimmung einer zu einer Kante gehörenden Kantenlinie mittels Kantenextraktion durch digitale Bildverarbeitung erfolgen, wobei im Bild eine Abweichung der Ausrichtungsanzeigenfunktionalität von der zu der ausgewählten Kante gehörigen Kantenlinie bestimmt wird, woraus eine entsprechende Korrektur der Ausrichtung der Anzieleinheit bestimmt wird und darauf basierend die Anzieleinheit auf die ausgewählte Kantenlinie ausgerichtet wird.

Gemäss einer möglichen Ausführungsform der Erfindung kann nach Verfolgung einer Kantenlinie von dem ersten Eckpunkt bis zu einem ersten weiteren Eckpunkt die Kantenverfolgungs- und Projektionsfunktionalität angehalten, benutzerdefiniert eine Vermessung des ersten weiteren Eckpunkts durchgeführt und/oder die Kantenverfolgungs- und Projektionsfunktionalität bis zu einem weiteren Eckpunkt fortgesetzt werden.

Vorschläge zur Verfolgung von Kantenlinien können durch Symbole auf einem Display der Auswerte- und Steuereinheit dem Benutzer dargestellt werden, und eine Auswahl einer zu verfolgenden Kantenlinie bzw. Bestätigung eines Vorschlags kann durch Anklicken bzw. Berühren des zugehörigen Symbols auf einem Touchscreen erfolgen.

Vorschläge zur Verfolgung von Kantenlinien können auch durch alphanumerische Zeichen auf einem Display der Auswerte- und Steuereinheit dem Benutzer dargestellt werden, und eine Auswahl einer zu verfolgenden Kantenlinie bzw. Bestätigung eines Vorschlags kann durch Eingabe eines entsprechenden alphanumerischen Zeichens auf einer Tastatur der Auswerte- und Steuereinheit erfolgen.

Eine Auswahl einer zu verfolgenden Kante kann auch durch Markieren einer Linie auf einem Display der Auswerte- und Steuereinheit, beispielsweise mittels eines Stifts auf einem Touchscreen, erfolgen.

Kennzeichen einer besonderen Ausführungsform des erfindungsgemässen Konstruktionsvermessungsgeräts ist, dass die Kantenverfolgungs- und Projektionsfunktionalität ausgestattet ist zur Bereitstellung einer Option für eine automatische Verfolgung und Vermessung von Kantenlinien entlang eines kontinuierlichen Pfads zwischen mehreren benachbarten Eckpunkten, wobei die Kantenlinien eine gemeinsame Oberfläche der Konstruktion umschliessen.

Die Kantenverfolgungs- und Projektionsfunktionalität kann ausgelegt sein zur Verfolgung rechtwinklig zueinander angeordneter Kantenlinien.

Die Kantenverfolgungs- und Projektionsfunktionalität kann auch ausgelegt sein zur Verfolgung von in einem von 90° abweichenden Winkel zueinander angeordneter Kantenlinien.

Des Weiteren kann die Kantenverfolgungs- und Projektionsfunktionalität ausgelegt sein zur Verfolgung gebogener Kantenlinien.

Ein weiterer Gegenstand der Erfindung ist ein Computerprogrammprodukt mit Programmcode, der auf einem maschinenlesbaren Träger gespeichert ist, zur Bereitstellung, Steuerung und Durchführung der Kantenverfolgungs- und Projektionsfunktionalität des erfindungsgemässen Konstruktionsvermessungsgeräts nach einer der vorgenannten Ausführungsformen. Vorzugsweise wird das Programm auf einer als Auswerte- und Steuereinheit des erfindungsgemässen Konstruktionsvermessungsgeräts ausgebildeten elektronischen Datenverarbeitungseinheit ausgeführt.

Ein weiterer Gegenstand der Erfindung ist ein Verfahren zum Verfolgen und Vermessen bzw. Markieren von Raumpunkten entlang Kanten und/oder von Eckpunkten zwischen aneinandergrenzenden Oberflächen einer Konstruktion im Rahmen von Bau und/oder Ausbau - insbesondere Innenausbau von Gebäuden - mittels eines erfindungsgemässen Konstruktionsvermessungsgeräts nach einer der vorgenannten Ausführungsformen. Dem erfindungsgemässen Verfahren folgend wird zunächst die Anzieleinheit ausgerichtet auf einen bekannten bzw. von einem Benutzer definierten ersten Eckpunkt zwischen aneinandergrenzenden Oberflächen der Konstruktion bzw. des Raumes. Dieser erste Eckpunkt wird angemessen, seine Raumkoordinaten werden gespeichert, und es wird ein Bild dieses ersten Eckpunkts mit seiner Umgebung aufgenommen. Im Rahmen der Kantenverfolgungs- und Projektionsfunktionalität wird eine Kantenbestimmung mittels Bildverarbeitung vorgenommen, und es werden von diesem ersten Eckpunkt ausgehende Kantenlinien bestimmt. Eine benutzerdefinierte Kantenlinie wird dann automatisch bis zu einem weiteren Eckpunkt verfolgt, wobei gegebenenfalls entlang dieser Kantenlinie befindliche Raumpunkte vermessen werden.

Weitere Ausführungsformen des erfindungsgemässen Verfahrens sind den abhängigen Ansprüchen zu entnehmen.

Das erfindungsgemässe Konstruktionsvermessungsgerät und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird.

Im Einzelnen illustrieren
- Figur 1a und 1b: ein erfindungsgemässes Konstruktionsvermessungsgerät zum Verfolgen und Vermessen bzw. Markieren von Raumpunkten von Oberflächen einer Konstruktion, insbesondere Innenräumen von Gebäuden;
- Figur 2a bis 3b: die grundsätzliche Funktionsweise der Kantenverfolgungs- und Projektionsfunktionalität des erfindungsgemässen Konstruktionsvermessungsgeräts und des zugehörigen erfindungsgemässen Vermessungsverfahrens;
- Figur 4a bis 4c: verschiedene Varianten der Kantenverfolgungs- und Projektionsfunktionalität mit unterschiedlichen Eingabemöglichkeiten für einen Benutzer zur Veranlassung der Verfolgung einer Kantenlinie; und
- Figur 5a und 5b: weitere Details zu der Funktionalität der Kantenverfolgung zwecks einer Erklärung des Verfahrensablaufs für eine sequentielle Eckpunktbestimmung, nachdem von einem Benutzer eine von einem ersten Eckpunkt ausgehende und zu verfolgende Kantenlinie ausgewählt wurde.

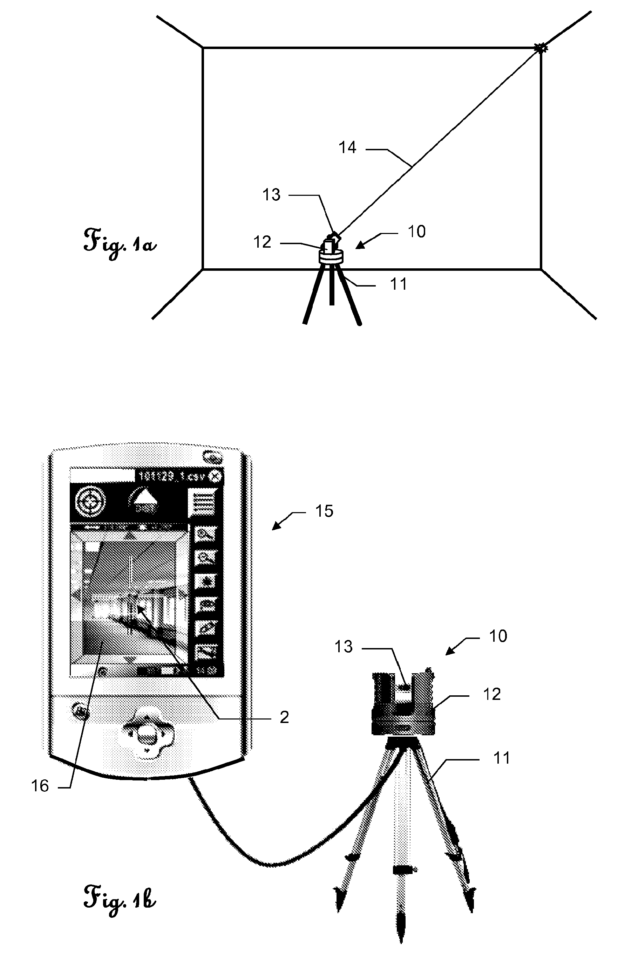

Figur 1a und 1b zeigen ein erfindungsgemässes Konstruktionsvermessungsgerät 10 zum Verfolgen und Vermessen bzw. Markieren von Raumpunkten von Oberflächen einer Konstruktion, insbesondere Innenräumen von Gebäuden. Das Konstruktionsvermessungsgerät 10 umfasst eine in diesem Beispiel als ein dreibeiniges Stativ ausgebildete Basis 11 mit einem darauf drehbar gelagerten Oberteil 12. Eine am Oberteil 12 schwenkbar gelagerte Anzieleinheit 13 ist mit einer zu einer Emission eines Laserstrahls 14 ausgebildeten Laserquelle und einem Laserlicht-Detektor als Entfernungsbestimmungsdetektor ausgestattet und stellt damit eine Distanzmessfunktionalität bereit. Die Anzieleinheit 13 umfasst des Weiteren einen bildgebenden Detektor, insbesondere eine Kamera.

Das Konstruktionsvermessungsgerät 10 umfasst des Weiteren eine Auswerte- und Steuereinheit 15, wie in Figur 1b illustriert, wobei ein erster und ein zweiter Drehantrieb (nicht dargestellt) das Oberteil 12 bzw. die Anzieleinheit 13 antreibbar bzw. in einem Azimut- und einem Elevationswinkel ausrichtbar machen. Die räumliche Ausrichtung der Anzieleinheit 13 gegenüber der Basis 11 ist über zwei Winkelmesser erfassbar. Zusätzlich können Neigungssensoren zur Bestimmung der Ausrichtung bezüglich des Schwerefeld-Vektors der Erde vorgesehen sein.

Die Auswerte- und Steuereinheit 15 verfügt über ein Display 16 mit einer Ausrichtungsanzeigefunktionalität 2.

Die Auswerte- und Steuereinheit 15 ist mit der Laserquelle, dem Laserlicht-Detektor sowie den Winkelmessern und gegebenenfalls mit den Neigungssensoren verbunden, um eine erfasste Distanz und erfasste Azimut- und Elevationswinkel einer entsprechenden Ausrichtung der Anzieleinheit 13 zuzuordnen und somit Koordinaten für Raumpunkte zu bestimmen. Ausserdem ist die Auswerte- und Steuereinheit 15 mit dem bildgebenden Detektor verbunden.

Erfindungsgemäss weist das Konstruktionsvermessungsgerät 10 eine nach Auslösung zumindest teilweise automatisch ablaufende Kantenverfolgungs- und Projektionsfunktionalität zum Verfolgen und Vermessen bzw. Markieren von Kanten und/oder Eckpunkten, und gegebenenfalls entlang einer Kante befindlichen Raumpunkten, zwischen aneinandergrenzenden, beliebig geformten Oberflächen der Konstruktion auf. Diese Funktionalität ist anhand der nachfolgenden Figuren illustriert.

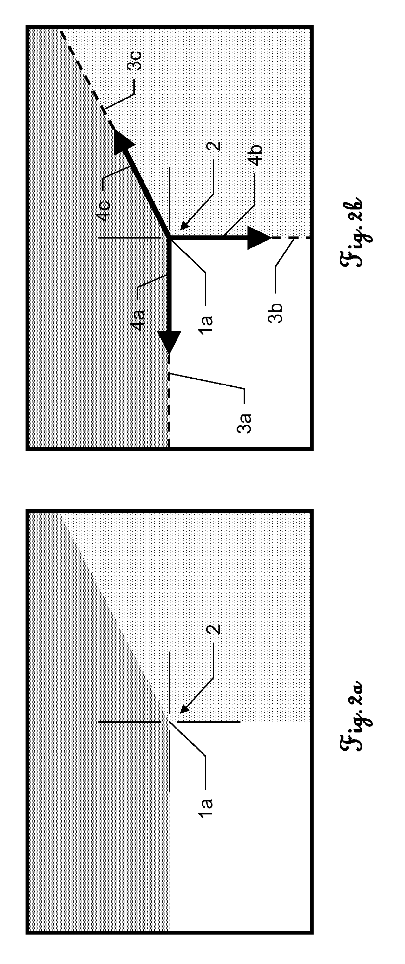

Figur 2a zeigt schematisch ein Bild auf dem Display 16 der Auswerte- und Steuereinheit 15 für eine Situation, bei welcher ein Benutzer mit der Anzieleinheit 13 einen ersten Eckpunkt 1a, beispielsweise an der Decke eines Raumes, anvisiert. Die Ausrichtung der Anzieleinheit 13 auf den Eckpunkt 1a ist im Display 16 mit einem Fadenkreuz als Ausrichtungsanzeigefunktionalität 2 angezeigt, wobei das Zentrum des Fadenkreuzes mit dem angezielten Eckpunkt 1a übereinstimmt.

Wie in Figur 2b dargestellt, wird nach Auslösung der Kantenverfolgungs- und Projektionsfunktionalität ein Bild des Eckpunkts 1a und seiner Umgebung aufgenommen. Basierend auf Bildverarbeitung werden alle vom Eckpunkt 1a ausgehenden Kantenlinien 3a, 3b und 3c bestimmt. Die Richtung der identifizierten Kantenlinien 3a, 3b, 3c kann dem Benutzer beispielsweise durch Richtungspfeile 4a, 4b, 4c als Symbole dargestellt werden.

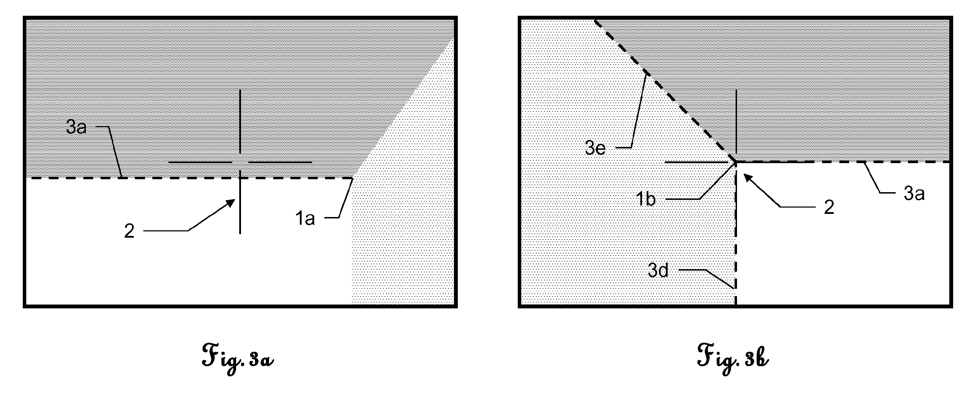

Durch Auswahl eines Symbols, beispielsweise 4a, zur Verfolgung der Kante 3a, und entsprechende Kommando-Eingabe an die Auswerte- und Steuereinheit 15, beispielsweise durch Maus-Klick auf das Symbol 4a, Berührung dieses Symbols auf einem Touchscreen oder Eingabe per Tastatur, wird die Auswerte- und Steuereinheit 15 dazu veranlasst, mittels Ansteuerung der Motorantriebe mit der Anzieleinheit 13 deren Ausrichtung, der Kantenlinie 3a folgend, zu ändern. Dieses ist in Figur 3a illustriert. Dabei werden fortlaufend Bilder aufgenommen, in denen mittels Bildverarbeitung die verfolgte Kantenlinie 3a bestimmt und eine Abweichung der aktuellen Anzielrichtung der Anzieleinheit 13, angezeigt durch das Zentrum des Fadenkreuzes als Ausrichtungsanzeigefunktionalität 2, von der Kantenlinie 3a bestimmt wird. Derartige Abweichungen werden in Winkelkorrekturen für die Ausrichtung der Anzieleinheit 13 umgerechnet, und deren Ausrichtung wird entsprechend automatisch korrigiert.

Wie in Figur 3b dargestellt, wird die Kantenlinie 3a automatisch weiter verfolgt, bis ein Kreuzungspunkt zweier oder mehrerer Kantenlinien 3a, 3d, 3e, entsprechend einem zweiten Eckpunkt 1b, ermittelt wird. Gemäss einer möglichen Ausführungsform der Erfindung wird die automatische Kantenverfolgungs- und Projektionsfunktionalität dann angehalten, und der Benutzer wird aufgefordert, eine Vermessung dieses zweiten Eckpunkts 1b oder eine Fortsetzung der Kantenverfolgungs- und Projektionsfunktionalität entlang einer weiteren Kantenlinie bis zu einem weiteren Eckpunkt zu veranlassen. Im letzteren Fall werden die Verfahrensschritte der Kantenverfolgungs- und Projektionsfunktionalität entsprechend den Illustrationen in den Figuren 2b, 3a und 3b und der zugehörigen vorangehenden Beschreibung wiederholt.

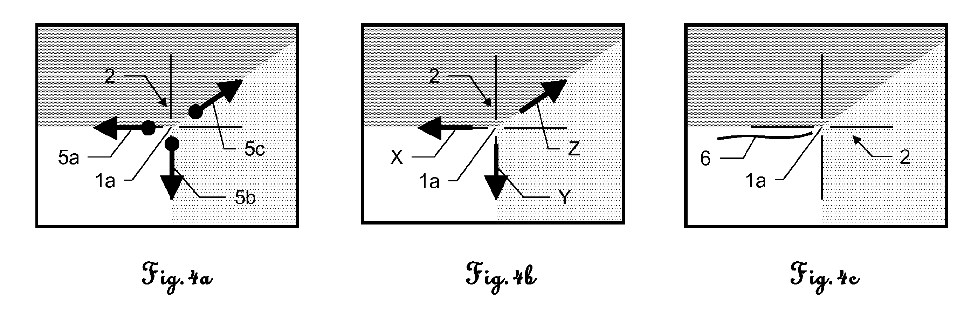

Ohne Beschränkung der Allgemeinheit sind in den Figuren 4a bis 4c verschiedene Varianten der Kantenverfolgungs- und Projektionsfunktionalität mit unterschiedlichen Eingabemöglichkeiten für einen Benutzer dargestellt, die Verfolgung einer Kantenlinie zu veranlassen, wobei im Detektorbild auf dem Display 16 jeweils die Ausrichtung der Anzieleinheit 13 auf einen ersten Eckpunkt 1a mittels der Ausrichtungsanzeigefunktionalität 2 angegeben ist.

Figur 4a illustriert Pfeile 5a, 5b, 5c, die auf einem als Touchscreen ausgebildeten Display 16 dargestellt werden und deren Berührung auf dem Display 16, beispielsweise mit einem Stift, eine Verfahrung der Anzieleinheit 13 entlang der angezeigten Richtung auslöst.

Figur 4b illustriert die Anzeige von alphanumerischen Zeichen X, Y, Z für unterschiedliche vorgeschlagene Verfahrungsrichtungen entlang verschiedener Kantenlinien auf dem Display 16, deren Eingabe über eine Tastatur eine entsprechende Verfahrung der Anzieleinheit veranlasst.

Figur 4c illustriert eine weitere Möglichkeit zur Veranlassung der Verfolgung einer Kantenlinie, indem der Benutzer auf einem Display 16 der Auswerte- und Steuereinheit 15 eine Linie 6 markiert, indem er, beispielsweise mittels eines Stifts auf einem Touchscreen, ausgehend nahe vom Eckpunkt 1a eine der abgehenden Kanten näherungsweise nachzieht.

Rückbeziehend auf die Figuren 2b und 3b wird eine besondere Ausführungsform des erfindungsgemässen Konstruktionsvermessungsgeräts erklärt, gemäss derer die Kantenverfolgungs-und Projektionsfunktionalität ausgestattet ist zur Bereitstellung einer Option für eine automatische Verfolgung und Vermessung von Kantenlinien entlang eines kontinuierlichen Pfads zwischen mehreren benachbarten Eckpunkten, wobei die Kantenlinien eine gemeinsame Oberfläche der Konstruktion umschliessen.

Ausgangspunkt für diese Option ist, dass bekanntermassen einer von Kantenlinien umschlossenen Oberfläche entsprechende Eckpunkte zugeordnet werden können und von dieser Oberfläche wegweisende Kantenlinien ausschliessbar sind. Aktuelle Aufgabenstellung kann beispielsweise die Bestimmung der vier Eckpunkte der Decke eines rechteckigen Raumes sein.

Bezugnehmend auf Figur 2b kann ein Benutzer nach Auswahl und Vermessung eines ersten Eckpunkts 1a und automatischer Bestimmung der davon ausgehenden Kantenlinien 3a, 3b, 3c die von der Decke wegführende Kantenlinie 3b ausschliessen, so dass als Alternativen nur noch potentiell zu verfolgende Kantenlinien 3a, 3c übrig bleiben. Beispielsweise werde die Kantenlinie 3a ausgewählt, weil sie in der zweidimensionalen Bilddarstellung die geringste Neigung zur Bildhorizontalen aufweist und damit mit grosser Wahrscheinlichkeit eine Begrenzungslinie einer Horizontalebene wie einer Zimmerdecke darstellt. Entsprechend dieser Option der besonderen Ausführungsform der Erfindung wird die Ausrichtung der Anzieleinheit 13 geändert, der Kantenlinie 3a folgend, bis der nächste Eckpunkt 1b, wie in Figur 3b dargestellt, erreicht wird. Gemäss dieser Funktionalitätsoption wird die Kantenlinie 3a als weiter zu verfolgende Kantenlinie ausgeschlossen, da sie bereits verfolgt wurde, ebenso wie die Kantenlinie 3d, welche von der Decke wegführt, und die Kantenlinienverfolgung und Vermessung der Raumpunkte bzw. Eckpunkte wird automatisch fortgesetzt, der Kantenlinie 3e folgend.

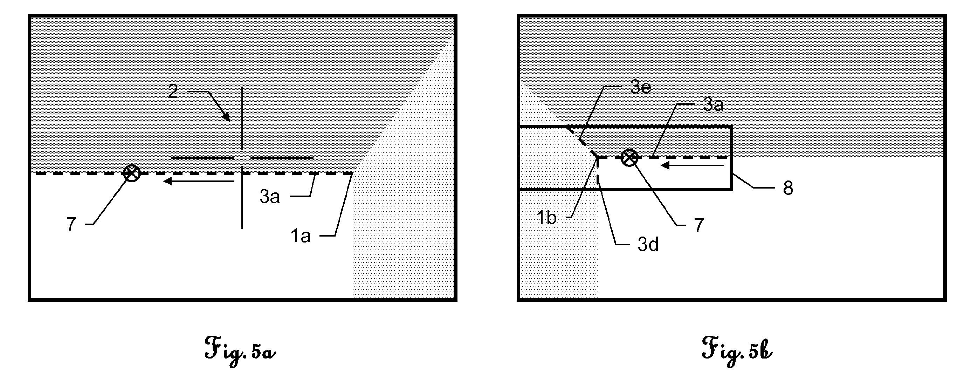

Die Figuren 5a und 5b illustrieren genauer die Funktionalitäten der Kantenverfolgung und -bestimmung sowie der Ermittlung von Eckpunkten.

Dabei dient Figur 5a einer Erklärung der Funktionalität der Kantenverfolgung für den Verfahrensablauf für eine sequentielle Eckpunktbestimmung, nachdem von einem Benutzer eine von einem Eckpunkt 1a ausgehende und zu verfolgende Kantenlinie 3a ausgewählt wurde. Entlang der Kantenlinie 3a wird ein darauf befindlicher beobachteter Raumpunkt 7 automatisch durch einen Algorithmus für die Kantenbestimmungsfunktionalität ausgewählt. Dieser Punkt 7 muss in der vom Benutzer ausgewählten Richtung entlang der zu verfolgenden Kantenlinie 3a, d.h. in diesem Beispiel der symbolisierten Display-Darstellung links von Eckpunkt 1a und dem Fadenkreuz als Ausrichtungsanzeigefunktionalität 2, angeordnet sein. Mittels der erfindungsgemässen Funktionalität wird überprüft, ob der Punkt 7 nahe zu einem Eckpunkt 1b, der im Detektorbild erfasst ist, angeordnet ist (siehe dazu auch nachfolgende Beschreibung zu Figur 5b). In diesem Fall wird die Anzieleinheit 13 automatisch auf den Eckpunkt 1b ausgerichtet und die automatische Kantenverfolgungsfunktionalität angehalten. Andernfalls, insbesondere bei Abweichung der Ausrichtung der Anzieleinheit 13 vom Verlauf der zu verfolgenden Kantenlinie 3a entsprechend der Anzeige der Ausrichtungsanzeigefunktionalität 2, werden Korrekturdaten basierend auf Messdaten für die aktuelle Ausrichtung des Anzieleinheit 13 und Kalibrationsdaten des erfindungsgemässen Konstruktionsvermessungsgeräts 10, insbesondere für die Messdaten des bildgebenden Detektors, berechnet und entsprechend die Ausrichtung der Anzieleinheit 13 nachgeführt.

Figur 5b illustriert die Bestimmung eines Eckpunkts 1b, bei dem sich Kantenlinien 3a, 3d, 3e schneiden. Im Rahmen einer Kontrollschleife der Kantenverfolgungs- und Projektionsfunktionalität wird überprüft, ob ein Punkt 7 als Zwischenpunkt nahe zu einem im Detektorbild erfassten Eckpunkt 1b gelegen ist. Eine Kantenbestimmung mittels Bildverarbeitung wird innerhalb eines Bildpunktgebiets 8 um den Punkt 7 durchgeführt, wobei die Grösse des Bildpunktgebiets 8 für die Kantenbestimmung vorzugsweise vom Benutzer definiert werden kann. Durch eine engere Bemessung des Bildpunktgebiets 8 können Rechenzeit und damit Zeitaufwand für den Vermessungsprozess deutlich reduziert werden. Dabei kann insbesondere eine optimierte Anpassung der Grösse eines zu analysierenden Bildpunktgebiets 8 an die Neigung der zu verfolgenden Kante 3a in der entsprechenden Bilddarstellung hilfreich sein.

In einer bevorzugten Ausführungsform muss zur Ausführung der Funktionalität die Anzieleinheit 13 zu Beginn nicht notwendigerweise bereits exakt auf den Eckpunkt 1a ausgerichtet sein (siehe Figur 3a). Es ist auch möglich, dass die Anzieleinheit 13 nur grob auf die Ecke ausgerichtet ist, die Ecke sich jedoch im Blickfeld des bildgebenden Detektors befindet. Mittels Bildverarbeitung wird aus einem aufgenommenen Bild die Position der Ecke zum Beispiel als Schnittpunkt mehrerer sich schneidender Kanten extrahiert, aus dieser Position die Winkelablage berechnet und darauf basierend die Anzieleinheit 13 auf den Eckpunkt 1a ausgerichtet.

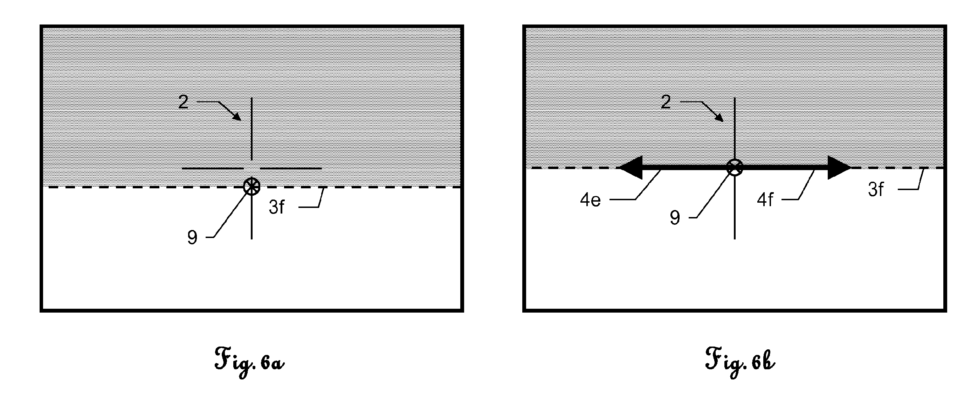

Wie in den Figuren 6a und 6b dargestellt, genügt es in einer bevorzugten Ausführungsform zum Start der Prozedur auch, dass sich statt eines Eckpunktes nur eine Kante 3f im Bildfeld der Kamera befindet. In diesem Fall wird das Vermessungsgerät 13 auf den auf dieser Kante 3f liegenden Punkt 9 ausgerichtet, der der aktuellen Ausrichtung am nächsten ist. In einem weiteren, in Figur 6b illustrierten Schritt wird dem Benutzer anschliessend die Möglichkeit geboten, durch Auswahl eines der Richtungspfeile 4e und 4f die Kante 3f in einer gewünschten Richtung bis zum nächsten Eckpunkt zu verfolgen, beispielsweise durch Berühren eines der Richtungspfeile 4e und 4f auf einem Touchscreen. Alternativ kann die Verfolgung der Kante 3f auch automatisch in einer der beiden Richtungen erfolgen.

Es versteht sich, dass diese dargestellten Figuren nur mögliche Ausführungsbeispiele schematisch darstellen. Die verschiedenen Ansätze können ebenso miteinander sowie mit Verfahren und Geräten des Standes der Technik kombiniert werden.

Die vorangehend beschriebene Erfindung ist dazu geeignet, den Prozess der Vermessung signifikanter Raumpunkten einer Konstruktion, insbesondere von Kanten und Eckpunkten innerhalb eines Raumes deutlich zu beschleunigen, verbunden mit einem erhöhten Bedienungskomfort für einen Benutzer.

## Patentansprüche

1. Konstruktionsvermessungsgerät (10) zum Verfolgen und Vermessen bzw. Markieren von Raumpunkten entlang Kanten und/oder von Eckpunkten zwischen aneinandergrenzenden Oberflächen einer Konstruktion im Rahmen von Bau und/oder Ausbau von Gebäuden mit
● einem an einer Basis (11) um eine Drehachse drehbar gelagerten Oberteil (12),
● einer am Oberteil (12) um eine Schwenkachse schwenkbar gelagerten Anzieleinheit (13), ausgestattet mit einer zur Emission eines Laserstrahls (14) ausgebildeten Laserquelle, einem bildgebenden Detektor und einer Ausrichtungsanzeigefunktionalität (2) zur Angabe einer Ausrichtung der Anzieleinheit (13) auf einen Raumpunkt als Anzielpunkt, und
● einer Auswerte- und Steuereinheit (15),
wobei
● ein erster und ein zweiter Drehantrieb das Oberteil (12) bzw. die Anzieleinheit (13) antreib-und ausrichtbar machen,
● eine räumliche Ausrichtung der Anzieleinheit gegenüber der Basis (11) über zwei Winkelmesser erfassbar ist, und
● die Auswerte- und Steuereinheit (15) mit der Laserquelle, dem Entfernungsbestimmungsdetektor und den Winkelmessern verbunden ist, um eine erfasste Distanz einer entsprechenden Ausrichtung zuzuordnen und somit Koordinaten für Raumpunkte zu bestimmen, sowie mit dem bildgebenden Detektor verbunden ist,
**dadurch gekennzeichnet, dass**
das Konstruktionsvermessungsgerät (10) zum Verfolgen und Vermessen bzw. Markieren von Kanten und/oder Eckpunkten und gegebenenfalls entlang einer Kante befindlichen Raumpunkten zwischen aneinandergrenzenden, beliebig geformten Oberflächen der Konstruktion eine nach Auslösung zumindest teilweise automatisch ablaufende Kantenverfolgungs- und Projektionsfunktionalität aufweist,
in deren Rahmen, nach Ausrichtung der Anzieleinheit (13) mit der Ausrichtungsanzeigefunktionalität (2) auf einen bekannten bzw. von einem Benutzer definierten ersten Eckpunkt (1a) oder einen ersten Kantenpunkt (9) zwischen aneinandergrenzenden Oberflächen der Konstruktion und einer Bildaufnahme dieses ersten Eckpunkts (1a) oder dieses ersten Kantenpunkts (9) mit seiner Umgebung mittels einer Kantenbestimmung durch Bildverarbeitung Kantenlinien (3a, 3b, 3c, 3d, 3e, 3f) bestimmt werden,
und eine benutzerdefinierte Kantenlinie (3a, 3b, 3c) von der Anzieleinheit (13) mindestens bis zu einem weiteren Eckpunkt (1b) automatisch verfolgt wird, wobei gegebenenfalls entlang der benutzerdefinierten Kantenlinie (3a, 3b, 3c) befindliche Raumpunkte vermessen werden.

2. Konstruktionsvermessungsgerät (10) nach Anspruch 1,
**dadurch gekennzeichnet, dass**
● die Kantenverfolgungs- und Projektionsfunktionalität dazu ausgelegt ist, dem Benutzer auf einem Display (16) der Auswerte- und Steuereinheit (15) Vorschläge zur Verfolgung von Kantenlinien (3a, 3b, 3c) durch Symbole (4a, 4b, 4c, 5a, 5b, 5c, X, Y, Z) darzustellen, und
● nach Auswahl und Bestätigung eines durch ein Symbol (4a, 4b, 4c, 5a, 5b, 5c, X, Y, Z) dargestellten Vorschlags eine ausgewählte Kantenlinie (3a, 3b, 3c) von der Anzieleinheit (13) mindestens bis zu einem weiteren Eckpunkt (1b) automatisch verfolgt wird, wobei gegebenenfalls entlang der benutzerdefinierten Kantenlinie (3a, 3b, 3c) befindliche Raumpunkte vermessen werden.

3. Konstruktionsvermessungsgerät (10) nach Anspruch 1 oder Anspruch 2,
**dadurch gekennzeichnet, dass**
die Kantenverfolgungs- und Projektionsfunktionalität derart ausgelegt ist, dass im Rahmen der Verfolgung einer ausgewählten Kantenlinie (3a, 3b, 3c) durch entsprechende Veränderung der Ausrichtung der Anzieleinheit (13) in horizontaler und/oder elevativer Richtung kontinuierlich und/oder periodisch eine Aufnahme von Bildern und eine Bestimmung einer zu einer Kante gehörenden Kantenlinie (3a, 3b, 3c) mittels Kantenextraktion durch digitale Bildverarbeitung erfolgt, wobei im Bild eine Abweichung der Ausrichtungsanzeigenfunktionalität (2) von der zu der ausgewählten Kante gehörigen Kantenlinie (3a, 3b, 3c) bestimmt wird, woraus eine entsprechende Korrektur der Ausrichtung der Anzieleinheit (13) bestimmt wird, und darauf basierend die Anzieleinheit (13) auf die ausgewählte Kantenlinie (3a, 3b, 3c) ausgerichtet wird.

4. Konstruktionsvermessungsgerät (10) nach einem der Ansprüche 1 bis 3,
**dadurch gekennzeichnet, dass**
nach Verfolgung einer Kantenlinie (3a, 3b, 3c) von dem ersten Eckpunkt (1a) bis zu einem ersten weiteren Eckpunkt (1b)
● die Kantenverfolgungs- und Projektionsfunktionalität angehalten wird,
● benutzerdefiniert eine Vermessung des ersten weiteren Eckpunkts (1b) durchgeführt wird, und/oder
● die Kantenverfolgungs- und Projektionsfunktionalität bis zu einem weiteren Eckpunkt fortgesetzt wird.

5. Konstruktionsvermessungsgerät (10) nach einem der Ansprüche 1 bis 4,
**dadurch gekennzeichnet, dass**
dem Benutzer auf einem Display (16) der Auswerte- und Steuereinheit (15) Vorschläge zur Verfolgung von Kantenlinien (3a, 3b, 3c) dargestellt werden
● durch Symbole (4a, 4b, 4c, 5a, 5b, 5c), wobei eine Auswahl einer zu verfolgenden Kantenlinie (3a, 3b, 3c) bzw. Bestätigung eines Vorschlags durch Anklicken bzw. Berühren des zugehörigen Symbols (4a, 4b, 4c, 5a, 5b, 5c) auf einem Touchscreen erfolgt; und/oder
● durch alphanumerische Zeichen (X, Y, Z), wobei eine Auswahl einer zu verfolgenden Kantenlinie (3a, 3b, 3c) bzw. Bestätigung eines Vorschlags durch Eingabe eines entsprechenden alphanumerischen Zeichens auf einer Tastatur der Auswerte- und Steuereinheit (15) erfolgt.

6. Konstruktionsvermessungsgerät (10) nach einem der Ansprüche 1 bis 5,
**dadurch gekennzeichnet, dass**
eine Auswahl einer zu verfolgenden Kantenlinie (3a, 3b, 3c) durch Markieren einer Linie (6) auf einem Display (16) der Auswerte- und Steuereinheit (15), insbesondere mittels eines Stifts auf einem Touchscreen, erfolgt.

7. Konstruktionsvermessungsgerät (10) nach einem der Ansprüche 1 bis 6,
**dadurch gekennzeichnet, dass**
die Kantenverfolgungs- und Projektionsfunktionalität ausgestattet ist zur Bereitstellung einer Option für eine automatische Verfolgung und Vermessung von Kantenlinien entlang eines kontinuierlichen Pfads zwischen mehreren benachbarten Eckpunkten, wobei die Kantenlinien eine gemeinsame Oberfläche der Konstruktion umschliessen.

8. Konstruktionsvermessungsgerät (10) nach einem der Ansprüche 1 bis 7,
**dadurch gekennzeichnet, dass**
die Kantenverfolgungs- und Projektionsfunktionalität zur Verfolgung von Kantenlinien (3a, 3b, 3c) ausgelegt ist, die
● rechtwinklig zueinander angeordnet sind;
● in einem von 90° abweichenden Winkel zueinander angeordnet sind; und/oder
● gebogen sind.

9. Verfahren mit einem Konstruktionsvermessungsgerät (10) zum Verfolgen und Vermessen bzw. Markieren von Raumpunkten entlang Kanten und/oder von Eckpunkten zwischen aneinandergrenzenden Oberflächen einer Konstruktion im Rahmen von Bau und/oder Ausbau von Gebäuden mit
● einem an einer Basis (11) um eine Drehachse drehbar gelagerten Oberteil (12),
● einer am Oberteil (12) um eine Schwenkachse schwenkbar gelagerten Anzieleinheit (13), die Distanzmessfunktionalität in Form eines Entfernungsbestimmungsdetektors bereitstellt, ausgestattet mit einer zur Emission eines Laserstrahls (14) ausgebildeten Laserquelle, einem bildgebenden Detektor und einer Ausrichtungsanzeigefunktionalität (2) zur Angabe einer Ausrichtung der Anzieleinheit (13) auf einen Raumpunkt als Anzielpunkt, und
● einer Auswerte- und Steuereinheit (15),
wobei
● ein erster und ein zweiter Drehantrieb das Oberteil (12) bzw. die Anzieleinheit (13) antreib-und ausrichtbar machen,
● eine räumliche Ausrichtung der Anzieleinheit (13) gegenüber der Basis (11) über zwei Winkelmesser erfassbar ist und
● die Auswerte- und Steuereinheit (15) mit der Laserquelle, dem Entfernungsbestimmungsdetektor sowie den Winkelmessern verbunden ist, um eine erfasste Distanz einer entsprechenden Ausrichtung zuzuordnen und somit Koordinaten für Raumpunkte zu bestimmen, sowie mit dem bildgebenden Detektor verbunden ist,
**dadurch gekennzeichnet, dass**
das Konstruktionsvermessungsgerät (10) zum Verfolgen und Vermessen bzw. Markieren von Kanten und/oder Eckpunkten und gegebenenfalls entlang einer Kante befindlichen Raumpunkten zwischen aneinandergrenzenden, beliebig geformten Oberflächen der Konstruktion eine nach Auslösung zumindest teilweise automatisch ablaufende Kantenverfolgungs- und Projektionsfunktionalität aufweist,
in deren Rahmen, nach Ausrichtung der Anzieleinheit (13) mit der Ausrichtungsanzeigefunktionalität (2) auf einen bekannten bzw. von einem Benutzer definierten ersten Eckpunkt (1a) zwischen aneinandergrenzenden Oberflächen der Konstruktion und einer Bildaufnahme dieses ersten Eckpunkts (1a) mit seiner Umgebung mittels einer Kantenbestimmung durch Bildverarbeitung Kantenlinien (3a, 3b, 3c, 3d, 3e) bestimmt werden und eine benutzerdefinierte Kantenlinie (3a, 3b, 3c) von der Anzieleinheit (13) mindestens bis zu einem weiteren Eckpunkt (1b) automatisch verfolgt wird, wobei gegebenenfalls entlang der benutzerdefinierten Kantenlinie (3a, 3b, 3c) befindliche Raumpunkte vermessen werden.

10. Verfahren nach Anspruch 9,
**dadurch gekennzeichnet, dass**
im Rahmen der Kantenverfolgungs- und Projektionsfunktionalität nach deren Aktivierung einem Benutzer Vorschläge zur Verfolgung von Kantenlinien (3a, 3b, 3c) durch Symbole (4a, 4b, 4c, 5a, 5b, 5c, X, Y, Z) auf einem Display (16) der Auswerte- und Steuereinheit (15) dem Benutzer dargestellt werden, und nach Auswahl und Bestätigung eines durch ein Symbol (4a, 4b, 4c, 5a, 5b, 5c, X, Y, Z) dargestellten Vorschlags eine ausgewählte Kantenlinie (3a, 3b, 3c) von der Anzieleinheit (13) mindestens bis zu einem weiteren Eckpunkt (1b) automatisch verfolgt wird, wobei gegebenenfalls entlang der benutzerdefinierten Kantenlinie (3a, 3b, 3c) befindliche Raumpunkte vermessen werden.

11. Verfahren nach Anspruch 9 oder 10,
**dadurch gekennzeichnet, dass**
die Kantenverfolgungs- und Projektionsfunktionalität derart ausgelegt ist, dass im Rahmen der Verfolgung einer ausgewählten Kantenlinie (3a, 3b, 3c) durch entsprechende Veränderung der Ausrichtung der Anzieleinheit (13) in horizontaler und/oder elevativer Richtung kontinuierlich und/oder periodisch eine Aufnahme von Bildern und eine Bestimmung einer zu einer Kante gehörenden Kantenlinie (3a, 3b, 3c) mittels Kantenextraktion durch digitale Bildverarbeitung erfolgt, wobei im Bild eine Abweichung der Ausrichtungsanzeigenfunktionalität (2) von der zu der ausgewählten Kante gehörigen Kantenlinie (3a, 3b, 3c) bestimmt wird, woraus eine entsprechende Korrektur der Ausrichtung der Anzieleinheit (13) bestimmt wird und darauf basierend die Anzieleinheit (13) auf die ausgewählte Kantenlinie (3a, 3b, 3c) ausgerichtet wird.

12. Verfahren nach einem der Ansprüche 9 bis 11,
**dadurch gekennzeichnet, dass**
nach Verfolgung einer Kantenlinie (3a, 3b, 3c) von dem ersten Eckpunkt (1a) bis zu einem ersten weiteren Eckpunkt (1b) die Kantenverfolgungs- und Projektionsfunktionalität angehalten, benutzerdefiniert eine Vermessung des ersten weiteren Eckpunkts (1b) durchgeführt und/oder die Kantenverfolgungs- und Projektionsfunktionalität bis zu einem weiteren Eckpunkt fortgesetzt wird.

13. Verfahren nach einem der Ansprüche 9 bis 12,
**dadurch gekennzeichnet, dass**
dem Benutzer auf einem Display (16) der Auswerte- und Steuereinheit (15) Vorschläge zur Verfolgung von Kantenlinien (3a, 3b, 3c) dargestellt werden
● durch Symbole (4a, 4b, 4c, 5a, 5b, 5c), wobei eine Auswahl einer zu verfolgenden Kantenlinie (3a, 3b, 3c) bzw. Bestätigung eines Vorschlags durch Anklicken bzw. Berühren des zugehörigen Symbols (4a, 4b, 4c, 5a, 5b, 5c) auf einem Touchscreen erfolgt; und/oder
● durch alphanumerische Zeichen (X, Y, Z), wobei eine Auswahl einer zu verfolgenden Kantenlinie (3a, 3b, 3c) bzw. Bestätigung eines Vorschlags durch Eingabe eines entsprechenden alphanumerischen Zeichens auf einer Tastatur der Auswerte- und Steuereinheit (15) erfolgt.

14. Verfahren nach einem der Ansprüche 9 bis 13,
**dadurch gekennzeichnet, dass**
eine Auswahl einer zu verfolgenden Kantenlinie (3a, 3b, 3c) durch Markieren einer Linie (6) auf einem Display (16) der Auswerte- und Steuereinheit (15), insbesondere mittels eines Stifts auf einem Touchscreen, erfolgt; und/oder
die Kantenverfolgungs- und Projektionsfunktionalität ausgestattet ist zur Bereitstellung einer Option für eine automatische Verfolgung und Vermessung von Kantenlinien entlang eines kontinuierlichen Pfads zwischen mehreren benachbarten Eckpunkten, wobei die Kantenlinien eine gemeinsame Oberfläche der Konstruktion umschliessen.

15. Computerprogrammprodukt mit Programmcode, der auf einem maschinenlesbaren Träger gespeichert ist, zur Durchführung des Verfahrens nach einem der Ansprüche 9 bis 14, insbesondere wenn das Programm auf einer als Auswerte- und Steuereinheit (15) des Konstruktionsvermessungsgeräts (10) nach einem der Ansprüche 1 bis 8 ausgebildeten elektronischen Datenverarbeitungseinheit ausgeführt wird.
